# EUROPÄISCHE PATENTSCHRIFT

(11) **EP 1 150 924 B1**
(45) Veröffentlichungstag und Bekanntmachung des Hinweises auf die Patenterteilung: **18.06.2008**
(21) Anmeldenummer: 99968313.9
(22) Anmeldetag: 15.12.1999
(51) Int. Cl.: C02F 11/18, C02F 11/04

(54) **VORRICHTUNG UND VERFAHREN ZUR REDUZIERUNG DER ORGANISCHEN ANTEILE EINES AUSFAULBAREN SUBSTRATS**
DEVICE AND METHOD FOR REDUCING THE ORGANIC PORTIONS OF A PUTRESCIBLE SUBSTRATE
DISPOSITIF ET PROCEDE PERMETTANT DE REDUIRE LES PARTIES ORGANIQUES D'UN SUBSTRAT PUTRESCIBLE

(30) Priorität: 17.12.1998 DE 19858187
(43) Veröffentlichungstag der Anmeldung: 07.11.2001
(73) Patentinhaber: EISENMANN Anlagenbau GmbH & Co. KG, 71032 Böblingen (DE)
(72) Erfinder: NACKE, Oliver, D-31737 Rinteln (DE); MASUCH, Klaus-Dieter, D-31737 Rinteln (DE)
(74) Vertreter: Ostertag, Ulrich
(86) Internationale Anmeldenummer: PCT/DE1999/004040
(87) Internationale Veröffentlichungsnummer: WO 2000/035817

(56) Entgegenhaltungen:
- EP-A- 0 179 234
- EP-A- 0 646 547
- EP-A- 0 737 651
- FR-A- 2 711 980

## Beschreibung

Die Erfindung betrifft ein Verfahren zur Reduzierung der organischen Anteile eines ausfaulbaren Substrates, bei dem dieses mindestens einer anaeroben Faulstufe zugeführt wird,
sowie
eine Vorrichtung zur Minderung der organischen Anteile im ausfaulbaren Substrat mit mindestens einem ersten Behältnis, in dem das ausfaulbare, Substrat einer anaeroben Ausfaulung unterzogen wird.

Derartige Verfahren zur Aufbereitung eines ausfaulbaren Substrats in einem Fermenter bzw. von Klärschlamm in Kläranlagen sind im Stande der Technik wohl bekannt (DE 39 19 3-50 A) Hauptziel ist bei der Anaerob-Technik, die in kommunalen Kläranlagen in Faultürmen betrieben wird, die Verringerung der geruchsbildenden Inhaltsstoffe und die Verringerung der organischen Schlammfeststoffe. Bei diesen Faulprozessen entstehen Gase, insbesondere Methan-Gas, das zum Betreiben sogenannter Blockheizkraftwerke (BHKW) verwendet werden kann. Die Hälfte der ursprünglichen 65% an organischen Schlamminhaltsstoffen je kg Trockensubstanz verlassen die Kläranlage jedoch noch auf dem Wege der Klärschlammentsorguna. Dabei bleibt ein Großteil ausfaulbarer organischer Trockensubstanz (etwa 50%) im Klärschlamm nach der ersten Faulung zurück.

Selbst bei an sich vielversprechenden Pasteurisierungsmaßnahmen von Klärschlamm bei einer Temperatur von etwa 70°C und einer Einwirkzeit von 25 bis 30 Minuten werden zwar Krankheitskeime und Wurmeier weitgehend vernichtet, ein Großteil ausfaulbarer Trockensubstanz bleibt jedoch im Klärschlamm weiterhin enthalten. Ende der 70er Jahre wurde erkannt, daß eine Pasteurisierung des Klärschlamms gravierende Nachteile aufweist. Durch die Pasteurisierung werden nicht nur die unerwünschten pathogenen Keime abgetötet, sondern auch die Methanbakterien, die zur Bildung von Biogas notwendig sind. Der pasteurisierte Klärschlamm ist also weitgehend frei von allen lebenden Mikroorganismen. Außerdem wird durch die Pasteurisierung Substrat in Lösung gebracht. Wenn der nachpasteurisierte Schlamm wieder mit Keimen infiziert wird, können sich die eingetragenen Keime völlig ungehindert vermehren. Da unter diesen Keimen natürlich auch verschiedene pathogene Keime enthalten sein können, ist der Erfolg der Entseuchung in Frage gestellt.

Da in dem technisch ausgefaulten Substrat/Klärschlamm ein erheblicher Restanteil an organischen Feststoffen enthalten ist, erhebt sich die Frage, wie diese abbaubaren organischen Feststoffe, die bei der Entsorgung erhebliche Probleme aufwerfen, weiter abgebaut werden können. Ziel aller Faulungsprozesse in kommunalen Kläranlagen ist es, den hohen Energiegehalt des Rohschlamms, der in Form von Kohlehydraten, Proteinen und Fetten vorliegt, möglichst weit abzubauen, d.h. die hochmolekularen reduzierten Verbindungen in niedermolekulare oxidierte Verbindungen zu überführen. Da im anaeroben Milieu kein Sauerstoff für eine vollständige Oxidation bis zum anorganischen Endprodukt (CO₂, NO₃) zur Verfügung steht, können die Abbauschritte nur bis zum energieärmeren Produkt führen. Um ein weitgehend stabilsiertes Substrat zu erhalten, müssen daher mehrere Abbauschritte, die von verschiedenen Organismengruppen durchgeführt werden, nacheinander ablaufen, um den Energiegehalt schrittweise zu reduzieren. Im Falle des vollständigen anaeroben Abbaus (Faulung) wird als Endprodukt Methan gebildet, das gasförmig aus dem System entweicht und erst bei einer externen Verbrennung zu CO₂ und H₂O abgebaut wird.

Die anaerobe Ausfaulung hat gegenüber der aeroben Kompostierung den Vorteil, daß bei der anaeroben Ausfaulung eine Gasausbeute erzielt werden kann. Ohne im einzelnen auf die biologischen Unterschiede bei den aeroben und anaeroben Abbauprozessen einzugehen, ist zu erwähnen, daß die Lebensfähigkeit der Bakterien von bestimmten Umweltbedingungen stark abhängig ist. Eine äußere Beeinflussung des Abbauprozesses muß sich deshalb in der Hauptsache auf die optimalen Lebensbedingungen der Methanbakterien ausrichten, die äußerst empfindlich auf Umweltänderungen reagieren.

Der Arbeitsbereich der Methanbakterien liegt zwischen C und 70°C. Bei höheren Temperaturen werden sie bis auf wenige Stämme, die bis zu 90°C leben können, abgetötet. Die Temperatur beeinflußt in hohem Maße biologische Vorgänge. Durch die Erhöhung der Temperatur innerhalb eines für die in Frage kommenden Bakterien verträglichen Temperaturbereichs wird der maximale Stoffwechselumsatz dieser Bakterienart eingestellt. Die Lage des optimalen Temperaturbereichs ist organismenspezifisch und kann je nach Organismusart unter 20°C und bis zu 90°C betragen. Daher erfolgt häufig auch eine Einteilung der Mikroorganismen nach Temperaturbereichen. Ferner spielt die Substratzusammensetzung, das Verhältnis von Kohlenstoff zu Stickstoff und Phosphor, zur Aufrechterhaltung der Lebensfunktion und zum Aufbau neuer Zellsubstanzen eine entscheidende Rolle. Weiterhin ist die Kenntnis des aktuellen pH-Wertes im Substrat für den kontinuierlichen Verlauf der Faulung von ausschlaggebender Bedeutung. Im Hinblick auf die ständig steigenden Anforderungen zur Vermeidung und Minderung von Abfallstoffen ist es unerlässlich, sich Gedanken zum weitergehenden Abbau energiehaltiger Stoffe im Klärschlamm zu machen. Zur Zeit werden ca. 25 % des anfallenden Klärschlammes landwirtschaftlich verwertet, 50 % deponiert, 10 % verbrannt und 15 % gehen in sonstige Entsorgungswege. Daher nehmen die entstehenden Kosten bei der Entsorgung des Klärschlamms einen Großteil des kommunalen Budgets ein.

Aus der FR 2 711 980 A ist ein Verfahren bekannt, bei welchem in einem einstufigen Faulprozess nach der ersten Phase, in welcher die Hydrolyse und Säurebildung stattfindet, noch vor der zweiten Phase, in welcher sich das Methangas bildet, eine thermische Behandlung eingeschoben wird.

Aufgabe der vorliegenden Erfindung ist es, ein Verfahren und eine Vorrichtung der eingangs genannten Art bereitzustellen, die in der Lage sind, eine erhebliche Verringerung der organischen Trockensubstanz in einem ausfaulbaren Substrat und einen energieautarken kostengünstigen Betrieb der Anlage zu gewährleisten.

Diese Aufgabe wird, was das Verfahren angeht, mit den Mitteln des Anspruches 1, was die Vorrichtung angeht, mit den Mitteln des Anspruches 7 gelöst.

Erfindungsgemäß wird also das ausfaulbare Substrat zwei anaeroben Faulstufen zugeführt, zwischen denen eine thermische Desintegration stattfindet.

In vielen Fällen ist bereits eine zweite anaerobe Faulstufe vorgesehen, so daß erfindungsgemäß lediglich die thermische Desintegrationsstufe zwischengeschaltet werden muß.

Für den Fall jedoch, daß nur eine anaerobe Faulstufe apparativ vorhanden ist, ist es zweckmäßig, entsprechend Anspruch 2 das ausfaulbare Substrat nach der thermischen Desintegration erneut einer vorausgegangenen anaeroben Faulstufe zuzuführen.

Bei normalem klärschlamm es zweckmäßig, daß bei der thermischen Desintegration die Verweilzeit zwischen 10 und 120 Minuten und die Verweiltemperatur zwischen 60°C und 90°C liegt.

Für den reibungslosen und betriebssicheren Ablauf der anaeroben thermischen Ausfaulung ist es vorteilhaft, daß die Verfahrensparameter, insbesondere die organische Trockensubstanz-Konzentration, die Temperatur, der pH-Wert und die Gasmengenentwicklung, automatisch überwacht und gesteuert werden.

Ferner ist es vorteilhaft, die thermischen Behandlungszonen kontinuierlich mit ausfaulbarem Substrat zu beschicken.

Vorteilhafte Ausführungsformen der erfindungsgemäßen Vorrichtung, welche im wesentlichen das vorrichtungsmäßige Analogon oben bereits beschriebener Verfahrensvarianten darstellen, finden sich in den Ansprüchen 8 bis 13.

Die Erfindung wird nachfolgend anhand der Zeichnung näher erläutert; es zeigen
- Figur 1a: ein Flußdiagramm für eine zweistufige erfindungsgemäße Vorrichtung mit einer thermischen Desintegrationsstufe;
- Figur 1b: ein Flußdiagramm einer erfindungsgemäßen Vorrichtung mit einer thermischen Desintegrationsstufe und nur einem Behältnis, in dem ein zweistufiger Faulprozess stattfindet;
- Figur 2: eine schematische Darstellung einer erfindungsgemäßen Vorrichtung mit zwei Faultürmen, zwischen die die thermische Desintegrationsstufe geschaltet ist;
- Figur 3: eine schematische Darstellung eines Versuchsaufbaus für eine erfindungsgemäße Vorrichtung;
- Figur 4: ein Diagramm, das die mittlere Verweilzeit (t) in Abhängigkeit von der Verweiltemperatur (T) wiedergibt;
- Figur 5: eine schematische Darstellung einer erfindungsgemäßen Vorrichtung mit zwei Faultürmen sowie mit deren peripheren Komponenten;
- Figur 6: eine schematische Darstellung einer erfindungsgemäßen Vorrichtung mit nur einem Faulturm und thermischer Desintegrationsstufe sowie deren peripheren Komponenten;
- Figur 7: eine Darstellung des Behältnisses zur thermischen Desintegration des ausfaulbaren Substrates mit einem Wärmetauscher und einem Verweilreaktor.

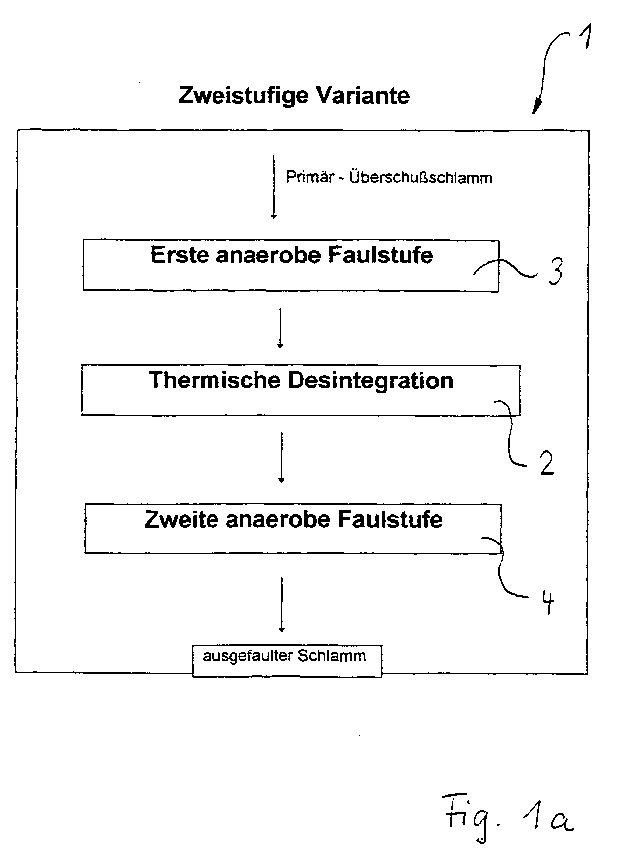

Die Figur 1a zeigt das Flußdiagramm einer zweistufigen erfindungsgemäßen Vorrichtung 1. Die erste anaerobe Faulstufe 3 wird mir primärem Überflußschlamm kontinuierlich beschickt.

Der Primär- bzw. Überschußschlamm ist allgemein gesprochen das ausfaulbare Substrat, das in der ersten anaeroben Faulstufe 3 einer Faulung von etwa 20 bis 30 Tagen unterzogen wird. Anschließend gelangt die ausgefaulte Substanz in eine thermische Desintegrationsstufe 2, in der das ausfaulbare Substrat einer weiter unten beschriebenen Aufschlußbehandlung unterliegt, in der der Aufschluß des Substrats erfolgt. Im Anschluß an die thermische Desintegration 2 erfolgt eine zweite anaerobe Faulung 4, die eine weitgehende Verringerung der organischen Trockensubstanz im ausfaulbaren Substrat bewirkt. Das technisch ausgefaulte Substrat gelangt dann in den üblichen Kreislauf, der an dieser Stelle nicht näher beschrieben wird.

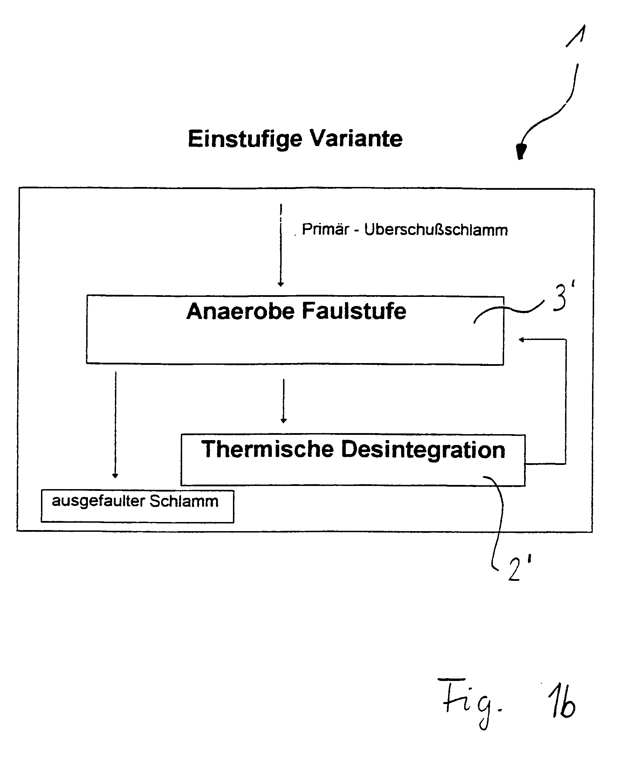

Die Fig. 1b zeigt ein Flußdiagramm einer einstufigen erfindungsgemäßen Vorrichtung 1'. Das primäre ausfaulbare Substrat gelangt zunächst in eine erste anaerobe Faulstufe 3' und wird dort einer 20- bis 30-tägigen Faulung unterzogen. Anschließend gelangt das ausfaulbare Substrat in die thermische Desintegrationsstufe 2', in der erfindungsgemäße eine Aufschlußbehandlung des ausfaulbaren Substrats erst erfolgt, wenn der Rohschlamm die bisher übliche Faulung durchlaufen hat. In der Aufschlußbehanälung wird das ausfaulbare Substrat auf eine vorbestimmte Temperatur zwischen 60°C und 95°C erhitzt und etwa 30 Minuten auf dieser Temperatur gehalten, wodurch nicht nur Krankheitserreger und Parasiten weitgehend abgetötet werden, sondern auch in der ersten Faulung nicht abgebaute Substanz zum Teil aufgeschlossen wird. Ganz besonders ist hierbei jedoch von Interesse, daß die im Schlamm enthaltene anaerobe. Biozönose weitgehend abgetötet und somit selbst einem schnelleren anaeroben Abbau in einer folgenden zweiten Faulung, die in der ersten Faulstufe 3' durchgeführt wird, zugeführt wird. Das technisch vollständig ausgefaulte Substrat wird dem üblichen,hier nicht näher beschriebenen Kreislauf zugeführt, um endgültig entsorgt zu werden.

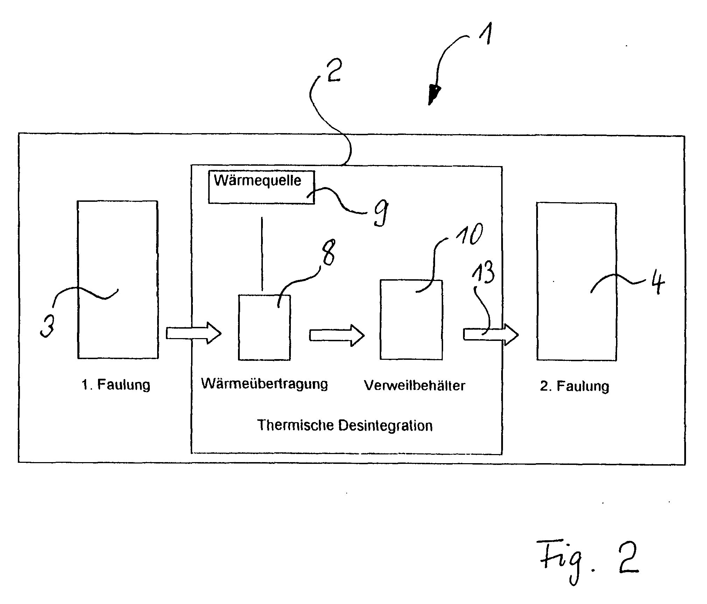

Die Fig. 2 zeigt ein Blockschaltbild der erfindungsgemäßen Vorrichtung 1, in dem die wichtigsten Komponenten der Vorrichtung 1 schematisch dargestellt sind. Die erste anaerobe Faulung findet in einem üblichen Faulturm 3 statt. Im Anschluß an die mehrtätige Ausfaulung gelangt das weiterhin ausfaulbare Substrat in ein Behältnis 2, in dem die thermische Desintegration durchgeführt wird. Dieses Behältnis 2 weist in der Regel mindestens einen Wärmetauscher 8 auf, der mit Hilfe einer Wärmequelle 9 das Substrat von etwa 35°C auf die substratspezifische Temperatur zwischen 60 und 95°C aufheizt. Nachdem das ausfaulbare Substrat auf die gewünschte vorbestimmte Verweiltemperatur T gebracht ist, gelangt es in einen sogenannten Verweilreaktor 10, in dem die in der ersten Faulung nicht abgebaute Substanz zum Teil aufgeschlossen wird. Um die Kontinuität der Beschickung der thermischen Desintegrationsstufe 2 zu gewährleisten, befindet sich am Ausgang 13 der thermischen Desintegrationsstufe 2 ein weiterer hier nicht gezeigter Wärmetauscher, der die Temperatur des weiterhin ausfaulbaren Substrats auf ca. 45 bis 50°C herabsetzt. Mit dieser Temperatur gelangt dann das Substrat in den zweiten Faulturm 4, in dem es einer weiteren Faulung bis hin zur vollständigen technischen Ausfaulung unterzogen wird.

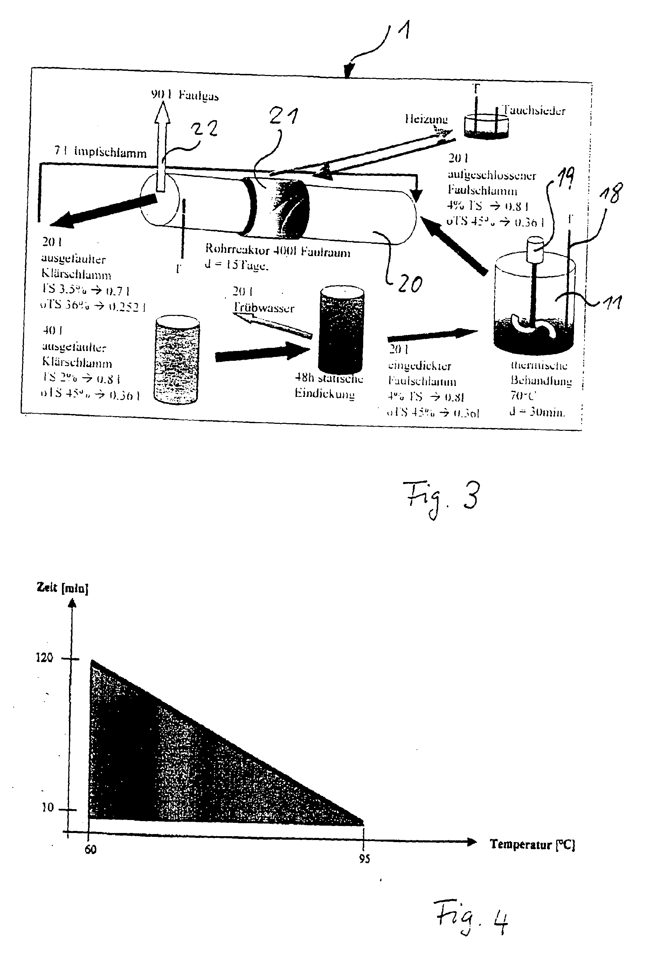

In Fig. 3 wird eine ergänzende schematische Darstellung der erfindungsgemäßen Vorrichtung 1 in einer Versuchsanlage gezeigt. Das in einem Faulturm ausgefaulte Substrat wird zunächst statisch entwässert und anschließend in einem isolierten Behälter 11 für ca. 30 Minuten auf eine Temperatur zwischen 70°C und 75°C erwärmt und mit einem Temperaturfühler 18 kontrolliert. Während der thermischen Behandlung wird mit Hilfe eines Rührwerks 19 das gesamte ausfaulbare Substrat gut durchmischt. Anschließend wird dieses Substrat zur Steigerung der biologischen Aktivität mit Impfschlamm vermischt und einem Rohrreaktor 20 zugeführt, in dem die weitere Umsetzung der organischen Substanzen zu Faulgas erfolgt. Eine Mantelheizung 21 sorgt für die Temperierung des Reaktors auf ca. 33°C. Die Gasausbeute wird am oberen Ende 22 des Reaktors 20 abgeführt. Das technisch ausgefaulte Substrat enthält etwa 3,5% Trockensubstanz, wovon 36% organische Trockensubstanz ist. Der hier beschriebene Ablauf wurde nach Abkühlung einer statischen Eindickung zugeführt, um die Entwässerbarkeit mit dem Entwässerungsverhalten des Ablaufs aus dem Faulturm 3 zu vergleichen. Mit der hier beschriebenen erfindungsgemäßen Versuchsanlage wurden folgende Ergebnisse erzielt. Die organische Trockensubstranz (oTS) des Faulschlamms aus dem Faulturm 3 der kommunalen Kläranlage wurde innerhalb von 10 Tagen von 45% auf 36% verringert. Ferner wurden Gaserträge aus dem ausgefaulten Schlamm des Faulturms von ca. 200 bis 260 1/kg oTS erzielt, obwohl die Versuchsdurchführung infolge verhältnismäßig niedriger Außentemperaturen erschwert wurde. Infolge der thermischen Behandlung des Faulschlamms mit anschließender mesophi-ler Nachfaulung konnte die statische Entwässerbarkeit des Faulschlamms im Vergleich zum Schlamm aus dem Faulturm der Kläranlage um 28% verbessert werden.

In Fig. 4 wird der funktionale Zusammenhang zwischen der Verweilzeit (t) und der Verweiltemperatur (T) gezeigt. Die typischen Verweilzeiten liegen zwischen 10 und 120 Minuten, während die typischen Temperaturen zwischen 60 und 95°C liegen. Die Verweilzeit ist die Zeit, in der das ausfaulbare Substrat mit einem gewissen oTS-Gehalt auf einer vorbestimmten substratspezifischen Verweiltemperatur (T) gehalten wird.

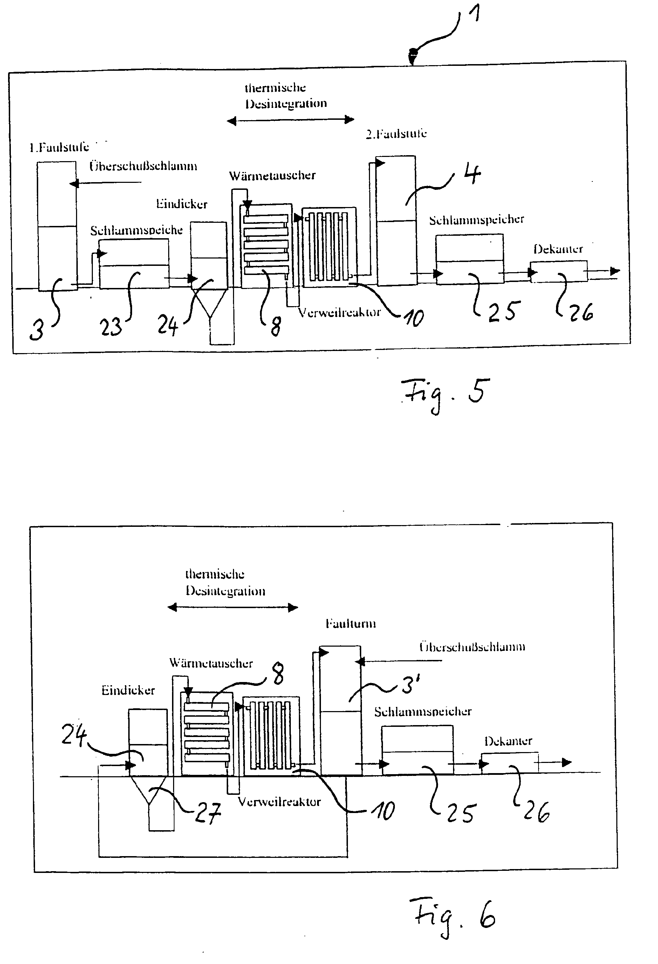

In Fig. 5 ist ein Blockschaltbild einer zweistufigen erfindungsgemäßen Vorrichtung mit ihren peripheren Aggregaten gezeigz. Hier wird schematisiert der praktische Aufbau einer kommunalen Kläranlage wiedergeaeben. Der Überschußschlamm wird zunächst 1:, dem auf der Kläranlage vorhandenen Faulturm 3 20 Tage lang gefault. Dann erfolgt nach einem Schlammspeicher 23 und einem Eindicker 24 die thermische Desintegration in den speziellen Komponenten wie Wärmetauscher 8 und Verweilreaktor 10. Im Anschluß daran wird das Substrat einer zweiten Faulstufe im zweiten Faulturm 4 zugeführt. Nach der zweiten Faulung gelangt der technisch ausgefaulte Schlamm in einen sogenannten Schlammspeicher 25 und anschließend in einen Dekanter 26 zur weiteren Entsorgung des Substrats.

In Fig. 6 ist schematisch eine einstufige erfindungsgemäße Vorrichtung 1' mit einer thermischen Desintegrationsstufe dargestellt. Bei dieser erfindungsgemäßen Ausführungsform gelangt der Überschußschlamm direkt in den Faulturm 3' und wird dann dem Eindicker 24 zugeführt. Dem trichterförmigen unteren Ende 27 des Eindickers 24 wird das ausfaulbare Substrat entnommen und dem Wärmetauscher 8 zugeführt. Vom Wärmetauscher 8 gelangt das ausfaulbare Substrat in den Verweilreaktor 10, in dem es ca. 30 Minuten verweilt. Mit der hernach abgekühlten Substanz wird der Faulturm 3' erneut beschickt, so daß hier eine weitere Faulung des ausfaulbaren Substrats erfolgt. Das vollständig technisch ausgefaulte Substrat gelangt sodann in den Schlammspeicher 25 und anschließend in den Dekanter 26 zur weiteren Entsorgung des ausgefaulten Substrats.

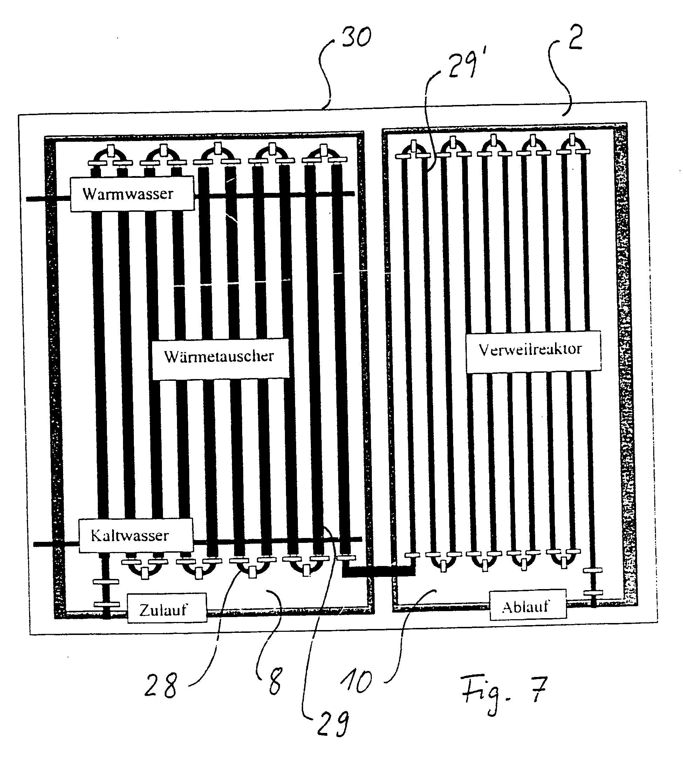

Die Fig. 7 zeigt ein erfindungsgemäßes Behältnis 2, in dem die thermische Desintegration des ausfaulbaren Substrats durchgeführt wird. Der Wärmetauscher 8 ist im hier gezeigten Ausführungsbeispiel mit Hilfe von Rohrschlangen 28 verwirklicht. Die Rohrschlangen, durch die das ausfaulbare Substrat langsam fließt, sind von einem Heizmantel 29 umgeben, der das Substrat auf die gewünschte vorbestimmte Temperatur bringt. Das aufgeheizte Substrat gelangt anschließend in den sogenannten Verweilreaktor 10, der ebenfalls mit Rohrschlangen 29' ausgeführt ist. Der Wärmetauscher 8 und der Verweilreaktor 10 sind mit einer Wärmeschutzschicht 30 isoliert. Die thermische Behandlungsstufe wird kontinuierlich beschickt. Der erwärmte Schlamm wird anschließend in den Faulturm 4 geleitet und wird dort weiter ausgefault. Das entstehende Gas wird über einen hier nicht gezeigten Kondensator, der ebenfalls in dem Behältnis 2 untergebracht ist, in die Gasleitung des Faulturms zum Gasspeicher abgeführt.

Die Erfindung ist deshalb für die Praxis von ausschlaggebender Bedeutung, da in den kommunalen Klärschlämmen ein Anteil von ca. 45 bis 50% Organik enthalten ist. Ziel der erfindungsgemä-ßen Vorrichtung bzw. Methode ist es neben der weitergehenden Reduzierung der organischen Schlamminhaltsstoffe (oTS), eine weitgehende Klärschlammentseuchung durchzuführen, wobei potentielle Infektionsketten infolge von Krankheitserregern durch die Abtötung von Bakterien und die Schädigung von Parasiten unterbrochen werden. Klärschlamm enthält praktisch alle Krankheitserreger, die im Einzugsgebiet der Kläranlage in das Abwasser gelangen, soweit sie nicht bereits im Abwasser selber oder bei der Klärschlammgewinnung und Behandlung absterben. Diese Zielsetzung wurde weitgehend mit der erfindungsgemäßen Anlage erreicht.

## Patentansprüche

1. Verfahren zur Reduzierung der organischen Anteile
eines ausfaulbaren Substrates, bei dem dieses mindestens einer anaeroben Ausfaulung mit Methangasausbeute zugeführt wird,
**dadurch gekennzeichnet, daß**
das ausfaulbare Substrat nach mindestens einer anaeroben Ausfaulung mit Methangasausbeute einer thermischen Desintegration zugeführt wird, in welcher dem ausfaulbaren Substrat Wärme zugeführt und das ausfaulbare Substrat über eine Verweilzeit zwischen 10 und 120 Minuten auf einer Temperatur zwischen 60°C und 95°C gehalten wird,
das ausfaulbare Substrat nach der thermischen Desintegration einer zweiten anaeroben Ausfaulung mit Methangasausbeute zugeführt wird.

2. Verfahren nach Anspruch 1, **dadurch gekennzeichnet, daß** das ausfaulbare Substrat nach der thermischen Desintegration erneut einer vorausgegangenen anaeroben Faulstufe zugeführt wird.

3. Verfahren nach Anspruch 1 oder 2, **dadurch gekennzeichnet, daß** dem ausfaulbaren Substrat nach der thermischen Desintegration Wärme entzogen wird.

4. Verfahren nach einem der vorhergehenden Ansprüche,
**dadurch gekennzeichnet, daß** die Verfahrensparameter, insbesondere die organische Trockensubstanz-Konzentration, die Temperatur, der pH-Wert und die Gasmengenentwicklung, automatisch überwacht und gesteuert werden.

5. Verfahren nach einem der vorhergehenden Ansprüche,
**dadurch gekennzeichnet, daß** die thermischen Behandlungszonen kontinuierlich mit ausfaulbarem Substrat beschickt werden.

6. Vorrichtung zur Minderung der organischen Anteile
im ausfaulbaren Substrat mit mindestens einem Behältnis, in dem das ausfaulbare Substrat einer ersten anaeroben Ausfaulung mit Methangasausbeute unterzogen wird, und mit einem Behältnis, in dem das ausfaulbare Substrat einer zweiten anaeroben Ausfaulung mit Methangasausbeute unterzogen wird,
**dadurch gekennzeichnet, daß**
das Behältnis (3, 3'), in dem das Substrat einer ersten anaeroben Ausfaulung mit Methangasausbeute unterzogen wird, mit einem weiteren Behältnis (2, 2') verbunden ist, in welchem das ausfaulbare Substrat einer thermischen Desintegration unterzogen wird, und das mindestens einen Wärmetauscher (8) sowie mindestens einen Verweilreaktor (10) aufweist, wobei die Temperatur im Verweilreaktor (10) konstant einen Wert zwischen 60°C und 90°C besitzt,
das weitere Behältnis (2, 2') mit dem Behältnis (4, 3') verbunden ist, in dem das ausfaulbare Substrat einer zweiten anaeroben Ausfaulung mit Methangasausbeute unterzogen wird.

7. Vorrichtung nach Anspruch 6, **dadurch gekennzeichnet, daß** das Behältnis (3), in dem das Substrat einer ersten anaeroben Ausfaulung mit Methangasausbeute unterzogen wird, ein herkömmlicher Faulturm ist.

8. Vorrichtung nach Anspruch 6 oder 7, **dadurch gekennzeichnet, daß** das dem Behältnis (2), in dem die thermische Desintegration stattfindet, nachgeschaltete Behältnis (4), in dem die weitere anaerobe Ausfaulung mit Methangasausbeute stattfindet, ein Faulturm ist.

9. Vorrichtung nach einem der Ansprüche 6 bis 8, **dadurch gekennzeichnet, daß** das dem Behältnis (2'), in dem die thermische Desintegration stattfindet, nachgeschaltete Behältnis (3'), in dem die weitere anaerobe Ausfaulung mit Methangasausbeute stattfindet, das Behältnis (3') ist, in dem auch die erste anaerobe Ausfaulung mit Methangasausbeute stattfindet.

## Claims

1. Process for reducing the organic components of a digestible substrate, in which process said substrate is fed to at least one anaerobic digestion with the production of methane gas,
**characterized in that**
the digestible substrate is fed, after at least one anaerobic digestion with the production of methane gas, to a thermal disintegration in which heat is fed to the digestible substrate and the digestible substrate is kept at a temperature of between 60°C and 95°C during a dwell time of between 10 and 120 minutes,
after the thermal disintegration, the digestible substrate is fed to a second anaerobic digestion with the production of methane gas.

2. Method according to Claim 1, **characterized in that**, after the thermal disintegration, the digestible substrate is again fed to a preceding anaerobic digestion stage.

3. Method according to Claim 1 or 2, **characterized in that**, after the thermal disintegration, heat is abstracted from the digestible substrate.

4. Method according to any one of the preceding claims, **characterized in that** the process parameters, in particular the organic dry matter concentration, the temperature, the pH and the amount of gas evolved are automatically monitored and controlled.

5. Method according to any one of the preceding claims, **characterized in that** the thermal treatment zones are continuously charged with digestible substrate.

6. Apparatus for reducing the organic components in the digestible substrate, comprising at least one receptacle in which the digestible substrate is subjected to a first anaerobic digestion with the production of methane gas, and comprising a receptacle in which the digestible substrate is subjected to a second anaerobic digestion with the production of methane gas,
**characterized in that**
the receptacle (3, 3') in which the substrate is subjected to a first anaerobic digestion with the production of methane gas is connected to a further receptacle (2, 2') in which the digestible substrate is subjected to a thermal disintegration, and that has at least one heat exchanger (8) and at least one retaining reactor (10), wherein the temperature in the retaining reactor (10) has a constant value of between 60°C and 90°C,
the further receptacle (2, 2') is connected to the receptacle (4, 3') in which the digestible substrate is subjected to a second anaerobic digestion with the production of methane gas.

7. Apparatus according to Claim 6, **characterized in that** the receptacle (3) in which the substrate is subjected to a first anaerobic digestion with the production of methane gas is a conventional digester.

8. Apparatus according to Claim 6 or 7, **characterized in that** the receptacle (4) in which the further anaerobic digestion with the production of methane gas and which is downstream of the receptacle (2) in which the thermal digestion takes place is a digester.

9. Apparatus according to any one of Claims 6 to 8, **characterized in that** the receptacle (3') in which the further anaerobic digestion with the production of methane gas takes place and which is downstream of the receptacle (2') in which the thermal disintegration takes place is the receptacle (3') in which the first anaerobic digestion with the production of methane gas also takes place.

## Revendications

1. Procédé de réduction des fractions ou parties organiques d'un substrat putrescible, dans lequel celui-ci est conduit au moins vers une digestion anaérobie avec récupération de méthane gazeux ou de gaz de méthane, **caractérisé**
**en ce que** le substrat putrescible est conduit, après au moins une digestion anaérobie avec récupération de gaz de méthane, à une désintégration thermique, dans laquelle on amène de la chaleur au substrat putrescible, et le substrat putrescible est maintenu pendant un temps de séjour compris entre 10 et 120 minutes à une température comprise entre 60 °C et 95 °C,
**en ce que** le substrat putrescible, après la désintégration thermique, est amené à une seconde digestion anaérobie avec récupération de gaz de méthane.

2. Procédé selon la revendication 1, **caractérisé en ce que** le substrat putrescible, après la désintégration thermique, est à nouveau amené vers un étage ou étape précédent de digestion anaérobie.

3. Procédé selon la revendication 1 ou 2, **caractérisé en ce que** l'on retire ou extrait de la chaleur du substrat putrescible après la désintégration thermique.

4. Procédé selon l'une des revendications précédentes, **caractérisé en ce que** les paramètres de procédé, en particulier la concentration en substance organique sèche, la température, la valeur de pH et la quantité de gaz dégagée sont surveillés et commandés automatiquement.

5. Procédé selon l'une des revendications précédentes, **caractérisé en ce que** les zones de traitement thermique sont alimentées en continu en substrat putrescible.

6. Dispositif de réduction des fractions ou parties organiques dans un substrat putrescible, comportant au moins un réservoir ou récipient dans lequel le substrat putrescible est soumis à une première digestion anaérobie avec récupération de gaz de méthane, et un réservoir ou récipient dans lequel le substrat putrescible est soumis à une seconde digestion anaérobie avec récupération de gaz de méthane, **caractérisé**
**en ce que** le réservoir ou récipient (3, 3') dans lequel le substrat est soumis à une première digestion anaérobie avec récupération de gaz de méthane est relié à un autre réservoir ou récipient (2, 2') dans lequel le substrat putrescible est soumis à une désintégration thermique, et en ce qu'il présente au moins un échangeur de chaleur (8) ainsi qu'au moins un réacteur de maintien (10), la température dans le réacteur de maintien (10) possédant constamment une valeur entre 60 °C et 90 °C, en ce que l'autre réservoir ou récipient (2, 2') est relié au réservoir ou récipient (4, 3') dans lequel le substrat putrescible est soumis à une seconde digestion anaérobie avec récupération de gaz de méthane.

7. Dispositif selon la revendication 6, **caractérisé en ce que** le réservoir ou récipient (3) dans lequel le substrat est soumis à une première digestion anaérobie avec récupération de gaz de méthane est une tour de digestion usuelle.

8. Dispositif selon la revendication 6 ou 7, **caractérisé en ce que** le réservoir ou récipient (4), dans lequel se produit l'autre digestion anaérobie avec récupération de gaz de méthane, et qui est intercalé après le réservoir ou récipient (2) dans lequel se produit la désintégration thermique, est une tour de digestion.

9. Dispositif selon l'une des revendications 6 à 8, **caractérisé en ce que** le réservoir (3'), intercalé après le réservoir (2') dans lequel se produit la désintégration thermique, et dans lequel se produit l'autre digestion anaérobie avec récupération de gaz de méthane, est le réservoir (3') dans lequel se produit aussi la première digestion anaérobie avec récupération de gaz de méthane.
